# NOUVEAU FASCICULE DE BREVET EUROPEEN

(11) **EP 0 340 080 B2**
(45) Date de publication et mention de la décision concernant l'opposition: **02.08.1995**
(45) Mention de la délivrance du brevet: 13.05.1992
(21) Numéro de dépôt: 89401102.2
(22) Date de dépôt: 20.04.1989
(51) Int. Cl.: B60Q 1/26

(54) **Feu de signalisation à plusieurs fonctions, pour véhicule automobile**
Signalleuchte mit mehreren Funktionen für Fahrzeuge
Signalisation light with several functions for vehicles

(30) Priorité: 28.04.1988 FR 8805674
(43) Date de publication de la demande: 02.11.1989
(73) Titulaire: VALEO VISION, 93012 Bobigny Cédex (FR)
(72) Inventeur: Duneau, André, F-27000 Evreux (FR)
(74) Mandataire: Lemaire, Marc

(56) Documents cités:
- DE-A- 2 037 970
- DE-A- 2 811 286
- DE-A- 3 315 785
- FR-A- 1 332 650
- FR-A- 2 370 606
- US-A- 3 487 206
- US-A- 3 798 460
- US-A- 4 684 819

## Description

L'invention concerne un feu de signalisation à plusieurs fonctions pour véhicule automobile.

Habituellement, les feux de signalisation pour véhicule automobile comprennent plusieurs compartiments associés chacun à une fonction, telle que position, freinage, brouillard, changement de direction, chaque compartiment contenant une ampoule électrique ou lampe, un circuit électrique associé au feu commandant l'alimentation sélective des lampes.

Lorsque la réglementation l'autorise, un même compartiment peut assurer deux fonctions, par exemple position et freinage, ou position et brouillard. On utilise alors une lampe à deux filaments afin d'assurer, pour chaque fonction, l'intensité lumineuse requise pour la fonction correspondante.

Ces feux de signalisation conventionnels présentent divers inconvénients. Le plus important est la profondeur importante du feu qui nécessite des emboutis profonds dans la carrosserie et entraîne une perte de place importante, en particulier dans le coffre. En outre, ces feux à une seule lampe par fonction nécessitent une optique de répartition de la lumière émise qui est ponctuelle. II est difficile d'éviter, a l'allumage, l'apparition d'un point de plus grande brillance qui peut être éblouissant.

On a proposé (brevet FR-A-1.363.551), dans un feu traditionnel à une lampe par fonction, de shunter à volonté une résistance dans le circuit d'alimentation d'une lampe pour assurer, pour la même fonction, une intensité lumineuse différente selon les règlements locaux ou les conditions d'utilisation, par exemple jour et nuit. Ce feu de signalisation connu présente les mêmes inconvénients que les feux traditionnels et, en outre, sa connexion est compliquée.

La présente invention vise à fournir un nouveau feu de signalisation à plusieurs fonctions pour véhicule automobile, comportant plusieurs groupes de lampes correspondant chacun à au moins une fonction, qui permette d'utiliser au moins certaines des lampes pour plusieurs fonctions et qui puisse être connecté de manière traditionnelle.

A cet effet, le feu de signalisation selon l'invention, à plusieurs fonctions pour véhicules automobiles du type comportant un boîtier définissant plusieurs compartiments associés chacun à au moins une fonction de signalisation, est caractérisé par le fait que chacun desdits compartiments comporte une pluralité de lampes miniatures monofilaments assurant une première fonction de signalisation, ledit feu comportant au moins un dispositif d'atténuation R du flux lumineux des lampes miniatures d'au moins un compartiment, ledit dispositif étant intégré dans le boîtier et alimenté par une entrée séparée du circuit d'alimentation des lampes miniatures, de manière à réaliser une seconde fonction de signalisation.

A cet effet, le feu de signalisation selon l'invention est caractérisé par le fait qu'au moins un groupe de lampes peut être alimenté soit directement, soit par l'intermédiaire d'un dispostif d'atténuation du flux lumineux intégré dans le boitier de façon à assurer une deuxième fonction.

De la sorte, le feu de signalisation selon l'invention peut, sans nécessiter une modification du faisceau de fils d'alimentation, être substitué à un feu traditionnel dont certaines lampes possèdent deux filaments alimentés par l'une ou l'autre de deux entrées ou commandes différentes.

Le dispositif d'atténuation peut, par exemple, être au moins une résistance mise en série dans le circuit d'alimentation des lampes d'un des compartiments et disposée dans une zone du feu ne comportant pas d'ampoule, par exemple derrière le catadioptre. Cette dernière forme de réalisation permet d'éviter tout encombrement supplémentaire pour le feu.

Le dispositif d'atténuation peut aussi être un diviseur électronique de tension ou un hacheur électronique.

L'invention sera bien comprise à la lecture de la description suivante faite en se référant au dessin annexé dans lequel;
- la figure 1 est une vue schématique en plan d'un feu d signalisation selon un exemple de réalisation de l'invention,
- la figure 2 est une vue en coupe longitudinale du feu de la figure 1,
- la figure 3 est un schéma électrique d'une alimentation partielle, et
- la figure 4 est un schéma électrique du feu des figures 1 et 2.

Le feu selon l'invention comprend un premier compartiment 1 corresppondant à la fonction indication de direction, un deuxième compartiment 2 pour la fonction freinage (stop), un troisième compartiment 3, sans ampoule électrique, fermé par un catadioptre 4, un quatrième compartiment 5 pour la fonction recul et un cinquième compartiment 6 pour les fonctions brouillard et position (lanterne). En variante, le compartiment 2 peut assurer les fonctions position (lanterne) et stop, le compartiment 6 assurant alors seulement la fonction brouillard.

Les compartiments 1,2,5,6 comportent chacun une pluralité de lampes miniatures 7. Les lampes 7 sont reliées en série, pour chaque compartiement, à la masse M et à une entrée ou commande C.

En outre, les lampes 7 du compartient 2 (ou les lampes 7 du compartiment 6 en variante), sont reliées à une seconde entrée ou commande C' correspondant à la fonction lanterne, par l'intermédiaire d'une résitance R, logée en regard du catadioptre 4.

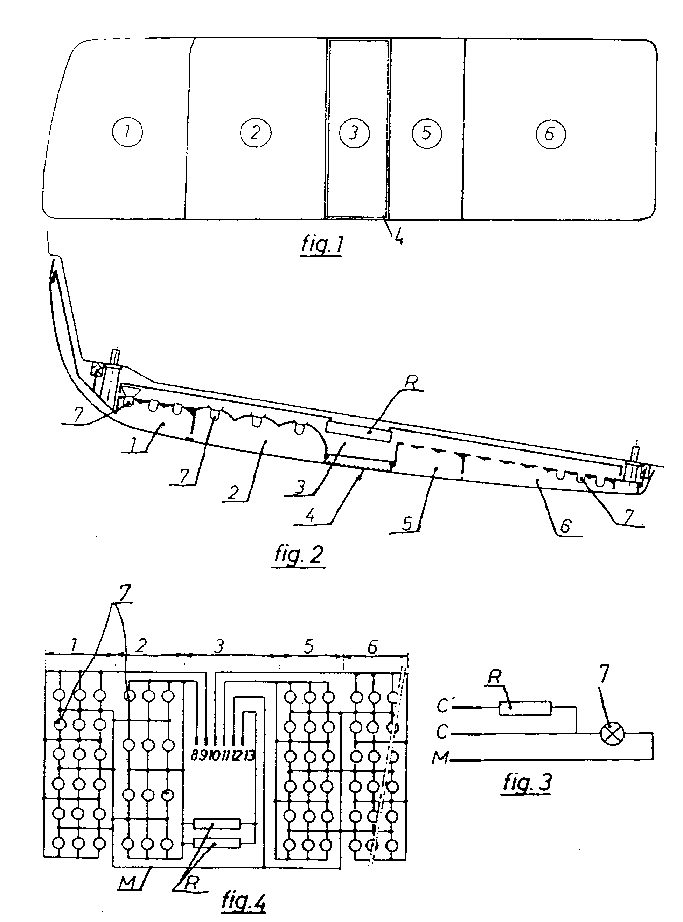

On voit sur le schéma électrique de la figure 4 que la connexion du feu comprend, de manière tradictionnelle une entrée "stop" 8 reliée aux lampes 7 du compartiment 2, une entrée "clignotant" 9 reliée aux lampes 7 du compartiment 1, une entrée "brouillard" 10 reliée aux lampes 7 du compartiment 6, une entrée "recul" 11 reliée aux lampes 7 du compartiment 5, une entrée de masse 12 commune à toutes les lampes 7 et une entrée "lanterne" 13 reliée aux lampes 7 du compartiment 2 par l'intermédiaire de deux résistances R en parallèle. Dans le cas de la variante, les résistance R seraient dans le circuit d'alimentation des lampes 7 du compartiment 6.

Cette connexion 8-13, qui peut être réalisée sous forme d'un connecteur à broches parallèles dans un circuit imprimé ou découpé, est complètement intégrée dans le feu, le branchement se faisant directement de manière traditionnelle.

Le feu selon l'invention, en particulier lorsque le dispositif d'atténuation est électronique, par exemple diviseur électronique de tension ou hacheur électronique, se prête particulièrement bien à une commande électronique par multiplexage.

II peut se monter en lieu et place d'un feu comportant des lampes multifilaments sans modification du faisceau électrique du véhicule.

## Revendications

1. Feu de signalisation à plusieurs fonctions pour véhicules automobiles du type comportant un boîtier définissant plusieurs compartiments (1,2,5,6) associés chacun à au moins une fonction de signalisation, caractérisé par le fait que chacun desdits compartiments comporte une pluralité de lampes miniatures monofilaments (7) assurant une première fonction de signalisation, ledit feu comportant au moins un dispositif d'atténuation R du flux lumineux des lampes miniatures (7) d'au moins un compartiment (2,6), ledit dispositif étant intégré dans le boîtier et alimenté par une entrée (c', 13) séparée du circuit d'alimentation des lampes miniatures (7), de manière à réaliser une seconde fonction de signalisation.

2. Feu de signalisation selon la revendication 1, caractérisé par le fait que ledit dispositif d'atténuation est constitué par au moins une résistance (R) en série dans le circuit d'alimentation des lampes (7) d'un compartiment (2).

3. Feu de signalisation selon la revendication 1, caractérisé par le fait que ledit dispositif d'atténuation est constitué par un diviseur électronique de tension en série dans le circuit d'alimentation des lampes (7) d'un compartiment (2).

4. Feu de signalisation selon la revendication 1, caractérisé par le fait que ledit dispositif d'atténuation est constitué par un hacheur électronique en série dans le circuit d'alimentation des lampes (7) d'un compartiment (2).

5. Feu de signalisation selon l'une des revendications 1 à 4, caractérisé par le fait que ledit dispositif d'atténuation est logé dans une zone (3) du feu ne comportant pas d'ampoules (7).

6. Feu de signalisation selon la revendication 5, caractérisé par le fait que la zone (3) du feu ne comportant pas d'ampoules (7) est celle située derrière le catadioptre (4).

7. Feu de signalisation selon l'une quelconque des revendications précédentes, caractérisé en ce qu'à au moins certaines lampes (7) sont associées deux entrées (8,13) dont l'une (13) comporte ledit dispositif d'atténuation (R).

## Claims

1. A multi-function indicator display for motor vehicles, of the type comprising a housing which defines a plurality of compartments (1, 2, 5, 6), each of which is associated with at least one indicating function, characterised by the fact that each of the said compartments contains a plurality of monofilament miniature lamps (7) which provide a first indicating function, the said display comprising at least one device R for attenuating the light flux of the miniature lamps (7) of at least one compartment (2, 6), the said device being integrated into the housing and being fed through an input (c', 13) separate from the circuit supplying the miniature lamps (7), whereby to provide a second indicating function.

2. An indicator display according to Claim 1, characterised by the fact that the said attenuating means comprises at least one resistor R connected in series in the supply circuit for the lamps (7) of one compartment (2).

3. An indicator display according to Claim 1, characterised by the fact that the said attenuating means comprises an electronic voltage divider, connected in series in the supply circuit for the lamps (7) of one compartment (2).

4. An indicator display according to Claim 1, characterised by the fact that the said attenuating means comprises an electronic chopper connected in series in the supply circuit for the lamps (7) of one compartment (2).

5. An indicator display according to one of Claims 1 to 4, characterised by the fact that the said attenuating means is mounted in a zone (3) of the display which contains no light bulbs (7).

6. An indicator display according to Claim 5, characterised by the fact that the zone (3) of the display having no light bulbs (7) is that situated behind the reflective screen (4).

7. An indicator display according to any one of the preceding Claims, characterised in that at least certain lamps (7) have two inputs (8, 13) associated with them, with one of said inputs (13) comprising the said attenuating means (R).

## Patentansprüche

1. Signalleuchte mit mehreren Funktionen für Fahrzeuge, enthaltend ein Gehäuse, das mehrere Abteile (1, 2, 5, 6) definiert, die jeweils wenigstens einer Signalfunktion zugeordnet sind , **dadurch gekennzeichnet,** daß jedes der genannten Abteile eine Mehrzahl von Einfaden-Miniaturlampen (7) umfaßt, die eine erste Signalfunktion erfüllen, wobei die genannte Leuchte wenigstens eine Vorrichtung zur Dämpfung (R) des Lichtstroms der Miniaturlampen (7) wenigstens eines Abteils (2, 6) umfaßt, wobei die genannte Vorrichtung im Gehäuse eingebaut und durch einen Eingang (c', 13) gespeist wird, der vom Speisestromkreis der Miniaturlampen (7) getrennt ist, so daß eine zweite Signalfunktion geschaffen wird.

2. Signalleuchte nach Anspruch 1, **dadurch gekennzeichnet,** daß die genannte Dämpfungsvorrichtung aus wenigstens einem Widerstand (R) besteht, der im Speisestromkreis für die Lampen (7) eines Abteils (2) in Serie geschaltet ist.

3. Signalleuchte nach Anspruch 1, **dadurch gekennzeichnet,** daß die genannte Dämpfungsvorrichtung aus einem elektronischen Spannungsteiler besteht, der im Speisestromkreis der Lampen (7) eines Abteils (2) in Serie geschaltet ist.

4. Signalleuchte nach Anspruch 1, **dadurch gekennzeichnet,** daß die genannte Dämpfungsvorrichtung aus einem elektronischen Zerhacker besteht, der im Speisestromkreis der Lampen (7) eines Abteils in Serie geschaltet ist.

5. Signalleuchte nach einem der Ansprüche 1 bis 4, **dadurch gekennzeichnet,** daß die genannte Dämpfungsvorrichtung in einem Bereich (3) der Leuchte angeordnet ist, der keine Glühbirnen (7) enthält.

6. Signalleuchte nach Anspruch 5, **dadurch gekennzeichnet,** daß der Bereich (3) der Leuchte, der keine Glühbirnen (7) enthält, derjenige Bereich ist, der hinter dem Rückstrahler (4) liegt.

7. Signalleuchte nach einem der vorherigen Ansprüche, **dadurch gekennzeichnet,** daß wenigstens bestimmte Lampen (7) zwei Eingängen (8, 13) zugeordnet sind, von denen der eine (13) die genannte Dämpfungsvorrichtung (R) enthält.
